Europäisches Patentamt

European Patent Office

Office européen des brevets

(19)

(11) Numéro de publication: **0 511 240 B1**

(12) **FASCICULE DE BREVET EUROPEEN**

(45) Date de publication de fascicule du brevet: **10.08.94**  (51) Int. Cl.5: **H01Q 3/26**, G06F 15/347

(21) Numéro de dépôt: **91901803.6**

(22) Date de dépôt: **20.12.90**

(86) Numéro de dépôt internationale :
**PCT/FR90/00932**

(87) Numéro de publication internationale :
**WO 91/11037 (25.07.91 91/17)**

(54) **PROCEDE ET DISPOSITIF DE SEPARATION DE SIGNAUX EN TEMPS REEL.**

(30) Priorité: **16.01.90 FR 9000436**

(43) Date de publication de la demande:
**04.11.92 Bulletin  92/45**

(45) Mention de la délivrance du brevet:
**10.08.94 Bulletin  94/32**

(84) Etats contractants désignés:
**DE GB**

(56) Documents cités:
**EP-A- 0 189 655**

**SPIE, Advanced Algorithms and Architectures for Signal Processing III,volume 975, 1988,J.G. McWhirter et al.: "Efficient MVDR processing using a systolic array",pages 385-392 voir l'article en entier cité dans la demande**

**Traitement du Signal, volume 5, no.6,1988,C. Jutten et al.: "Une solution neuromimétique au problème de séparation de sources", pages 389-403 voir l 'article en entier cité dans**

la demande.

**IEEE Transactions on Aerospace and Electronic Systems, volume 25, no.4, 4 juillet 1989, IEEE, Plc., (New York, US),M. Yuen: "Algorithmic, architectural and beam pattern issues of sidelobe cancellation", page 459-471 voir page 465 ; figure 3; page 467,paragraphe V**

(73) Titulaire: **THOMSON-CSF**
**173, Boulevard Haussmann**
**F-75008 Paris (FR)**

(72) Inventeur: **COMON, Pierre**
**161, avenue Sainte-Marguerite**
**F-06200 Nice (FR)**

(74) Mandataire: **Desperrier, Jean-Louis et al**
**THOMSON-CSF**
**SCPI**
**B.P. 329**
**50, rue Jean-Pierre Timbaud**
**F-92402 Courbevoie Cédex (FR)**

Rank Xerox (UK) Business Services
(3. 10/3.0 9/3.3.3)

## Description

La présente invention se rapporte à un procédé et à un dispositif de séparation en temps réel de signaux mélangés.

Le problème posé est l'identification aveugle d'un mélange de signaux. Des signaux sont reçus sur un certain nombre de capteurs, en nombre égal à p par exemple. Ces signaux proviennent d'un mélange, qui est par hypothèse linéaire mais dont la fonction de transfert est inconnue, d'un nombre n inférieur ou égal à p de signaux "sources" qui sont également inconnus, et qui, également par hypothèse, proviennent de sources indépendantes et non-Gaussiennes (sauf à la rigueur pour une seule d'entre elles). Il s'agit donc à la fois de séparer, c'est à dire d'identifier, ces signaux sources et de déterminer la fonction de transfert réalisant le mélange de signaux que l'on reçoit sur les p capteurs précités : c'est donc un problème de déconvolution aveugle.

En prenant l'exemple simple du domaine radar ou sonar, les signaux reçus par les capteurs qui constituent ensemble l'antenne de réception, sont généralement traités pour former des voies dans des directions choisies a priori, ce qui permet de séparer spatialement des "sources" constituées par des échos ou des bruiteurs. Le problème posé ici est d'identifier directement ces voies.

Ainsi, pour fixer les idées, si on considère deux sources $x_1(t)$ et $x_2(t)$, où t est la variable temporelle, et deux capteurs fournissant deux signaux $e_1(t)$ et $e_2(t)$ tels que :

$$e_1(t) = x_1(t) + \beta x_2(t)$$
$$e_2(t) = \alpha x_1(t) + x_2(t)$$

si on est alors capable d'obtenir $\alpha$ et $\beta$, c'est à dire d'identifier la matrice de transfert :

$$\begin{pmatrix} 1 & \beta \\ \alpha & 1 \end{pmatrix}$$

on dispose des deux voies

$$e_1(t) - \beta e_2(t)$$
et
$$e_2(t) - \alpha e_1(t)$$

qui réalisent la séparation souhaitée des signaux sources $x_1(t)$ et $x_2(t)$.

Dans cet exemple, les signaux sources sont pris au même instant t : le mélange des signaux est dit "instantané". En général, les mélanges ne sont pas instantanés, mais "convolutifs". Il est néanmoins possible de ramener un problème convolutif à un problème instantané en décomposant les signaux en signaux de fréquences pures par analyse spectrale obtenue par Transformation de FOURIER. En désignant la fréquence par f, chaque signal observé s'écrit alors :

$$e_i(t) = \sum_f e_i(t,f)$$

et chaque signal source s'écrit :

$$x_i(t) = \sum_f x_i(t,f)$$

Finalement, le problème de déconvolution aveugle à résoudre ici peut s'énoncer ainsi :

On observe p signaux (p supérieur ou égal à 2) dont on sait qu'ils sont issus de n signaux sources inconnus (n inférieur ou égal à p) par une transformation linéaire et stationnaire inconnue A(f) telle que :

2

$$e_i(t,f) = \sum_{j=1}^{j=n} A_{ij}(f) \; x_j(t,f))$$

avec : $1 \leq i \leq p$,

les signaux e(t), x(t) et la transformation A pouvant être des données complexes. Par ailleurs, il s'agit de sources indépendantes, et, sauf à la rigueur pour une seule d'entre elles, non Gaussiennes. La déconvolution aveugle consiste alors en la détermination de la fonction de transfert A et par suite de chacun des signaux-sources.

Une solution connue pour réaliser une séparation temporelle d'un mélange instantané A(f) = A de signaux est proposée par Messieurs C.JUTTEN et J.HERAULT dans plusieurs articles dont celui publié dans la revue française "Traitement du Signal", volume 5, N°6, 1988, page 389 à 403. Il s'agit d'un procédé de séparation qui utilise un réseau de neurones linéaires monocouche totalement interconnecté, dont les poids sont contrôlés par un algorithme qui s'apparente à celui de l'itération stochastique.

Ce procédé connu présente néanmoins quelques inconvénients :

.   l'algorithme utilisé ne converge pas toujours, et il peut de ce fait fournir des sorties erronées, qui divergeraient s'il n'y avait pas de saturation naturelle;
.   lorsqu'il y a convergence, la vitesse de convergence de cet algorithme peut être extrêmement lente ;
.   le fait qu'il y ait ou non convergence dépend de l'initialisation, ainsi que de la vitesse de convergence et de la solution fournie.

L'invention vise à remédier à ces inconvénients. Elle se rapporte à cet effet à un procédé de séparation en temps réel de signaux e(t) reçus par un nombre p de capteurs prédéterminé, p étant un entier naturel supérieur ou égal à 2, ces signaux provenant d'un mélange linéaire, mais de fonction de transfert inconnue, d'un nombre entier naturel n inférieur ou égal à p de signaux-sources x(t) qui sont également inconnus et qui proviennent de sources indépendantes et, sauf à la rigueur pour une d'entre elles, non Gaussiennes, dans lequel on traite ces signaux reçus e(t), captés et échantillonnés, dans une première étape (1) consistant à obtenir, de manière connue en soi, p signaux décorrélés s(t) à partir des signaux reçus e(t), la décorrélation n'étant pas réalisée à tous les ordres, caractérisé en ce qu'on traite ces signaux s(t) dans une deuxième étape (2) consistant à calculer une matrice orthogonale Q telle que x(t) = Q.s(t), x(t) étant les signaux-sources recherchés, cette matrice orthogonale Q, qui réalise une transformation linéaire, étant obtenue à partir de transformations polynomiales des données à l'aide de polynômes de degré 3 ou 4, et étant déterminée, à l'aide d'un algorithme stochastique qui mémorise des statistiques moyennes appelées moments et cumulants, et qui utilise alors ces moments et cumulants estimés pour réaliser la détermination en temps réel de la matrice Q.

Préférentiellement en outre, on introduit dans le calcul des facteurs d'oubli ajustables pour permettre au séparateur de faire face à des phénomènes variables, c'est à dire non stationnaires.

Si les p signaux observés sont issus d'un nombre n de signaux-sources qui est inférieur à p, le séparateur ne fonctionne que mieux : il considère alors automatiquement qu'il existe des sources fictives pratiquement nulles, générant uniquement les erreurs de calcul.

De toute façon, l'invention sera bien comprise, et ses avantages et autres caractéristiques ressortiront, lors de la description suivante d'un exemple non limitatif de réalisation, en référence au dessin schématique annexé dans lequel :

-   Figure 1 est un schéma synoptique d'ensemble de ce séparateur de signaux ;
-   Figure 2 est un schéma synoptique du "rotateur" utilisé dans le séparateur de la figure 1 ;
-   Figure 3 est une des cellules de "rotation" élémentaires utilisées dans le rotateur de la figure 2 ;
-   Figure 4 est une des cellules "produit" utilisée dans ce même rotateur ;
-   Figure 5 montre un exemple de trois signaux-sources ;
-   Figure 6 montre les trois signaux réellement observés, et correspondant à ces trois signaux-sources ; et
-   Figure 7 montre les signaux obtenus à l'aide du séparateur conforme à l'invention.

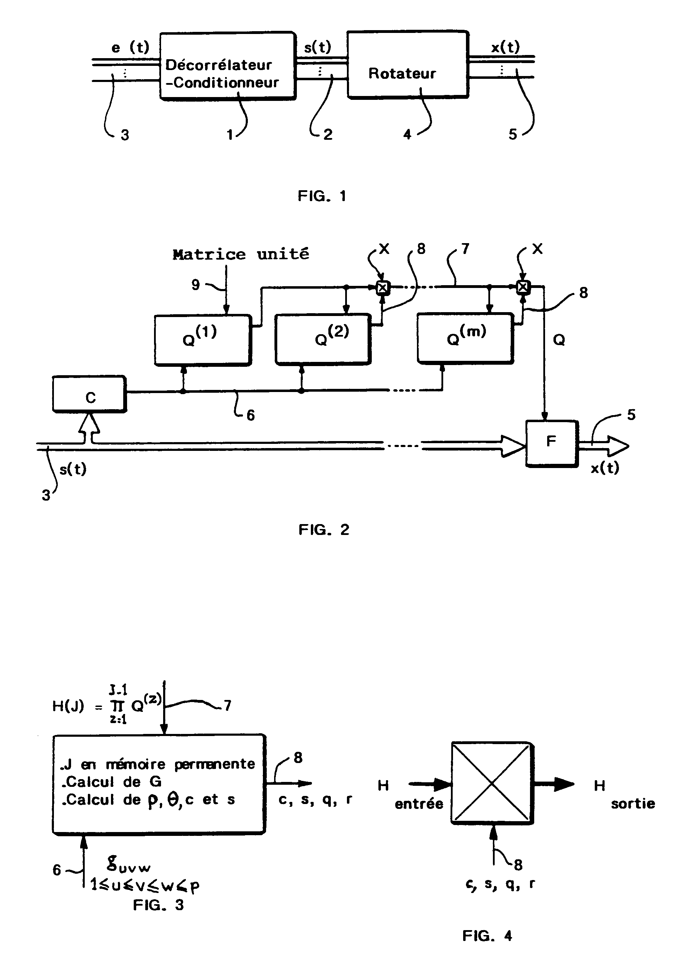

En se référant à la figure 1, ce séparateur de signaux en temps réel comporte un "décorrélateur-conditionneur" 1 apte à fournir, sur ses p sorties 2, p signaux décorrélés s(t) à partir des p signaux reçus, captés et échantillonnés, e(t) qui lui sont appliqués sur ses p entrées (3). Le fonctionnement du décorrélateur-conditionneur 1 est bien connu en soi, et est par exemple décrit dans un article de J.G. WHIRTER et T.J. SHEPHERD, publié dans "Proceedings SPIE", vol. 975, Advanced Algorithms and Architectures, San Diego, 1988, et aussi dans une communication de P. COMON, Colloque GRETSI, juin 1989, Juan-Les-Pins, pages 137 à 140.

EP 0 511 240 B1

Les p sorties s(t) en 2 sont appliquées à un dispositif 4 apte à effectuer le calcul de la matrice orthogonale Q précitée, telle que :

$$x(t) = Q . s(t)$$

x(t) étant les signaux-sources recherchés et obtenus en 5 sur les p sorties du bloc 4.

Ce bloc 4 est ici appelé "rotateur", car, comme on le verra ci-après, l'obtention de la matrice orthogonale Q revient à identifier une rotation.

La structure du rotateur est représentée figure 2. Les p signaux s(t) sont traités dans une chaîne de calculs pour obtenir la matrice Q. Dans la cellule notée F, on effectue le produit de Q par les signaux s(t). Les p signaux de sortie x(t) sont statistiquement indépendants et reproduisent au signe près les signaux-sources normalisés.

Deux algorithmes peuvent être mis en oeuvre :
- un algorithme I utilisant les moments d'ordre 3,
- un algorithme II utilisant les cumulants d'ordre 4, en particulier pour des signaux-sources en bande étroite.

La chaîne de calculs est composée d'une cellule C de calcul des moments ou cumulants. Elle possède p entrées et son nombre de sorties dépend de l'algorithme choisi. Elle est également composée de

$$m = \frac{p(p-1)}{2}$$

"rotateurs élémentaires" $Q^{(1)}$, $Q^{(2)}$,...$Q^{(j)}$,...$Q^{(m)}$ associés en cascade à (m-1) cellules de multiplication X.

A chaque période d'échantillonnage, c'est à dire à chaque arrivée de p échantillons des signaux s(t), les calculs sont effectués. On décrit maintenant ces calculs :

- Algorithme I :

La cellule C effectue le calcul des moments $g_{ijk}$ :

$$g_{ijk} := a^2.s_i(t).s_j(t)^*.s_k(t) + b^2.g_{ijk}$$

où le symbole(*) désigne la conjugaison complexe, et où le triplet (i,j,k) décrit le sous-ensemble de $\{1,2,...p\}^3$ pour lequel $i{\leq}j{\leq}k$.

Dans cette expression, a et b sont les facteurs d'oubli. Ce sont des réels de ]0 1[ satisfaisant $a^2 + b^2 = 1$. On peut jouer sur a ou b pour ajuster la puissance du moyennage statistique, et simultanément la durée de la stationnarité locale exploitée. Pour a petit, on moyennera beaucoup, et la stationnarité des processus sera supposé longue (la durée de moyennage équipondérée équivalente est de l'ordre de $1/a^2$). Par exemple, $0.01{\leq}a{\leq}0.05$ est raisonnable.

La cellule $Q^{(j)}$ (voir figure 3) a pour but d'évaluer les deux nombres, c et s, caractérisant la matrice de rotation élémentaire Q(q,r), notée $Q^{(j)}$ pour simplifier. Lorsque $1{\leq}q{\leq}r{\leq}p$, p(p-1)/2 couples (q,r) sont décrits, ce qui correspond à p(p-1)/2 rotateurs élémentaires. En choisissant une description par lignes, $Q^{(1)}$ = Q-(1,2),$Q^{(2)}$ = Q(1,3),...$Q^{(p)}$ = Q(1,p), $Q^{(p+1)}$ = Q(2,3),... Ceci établit bien une relation bijective entre J et le couple (q,r).

Sur la figure 2, le fil inférieur 6 transporte donc les valeurs des cumulants des entrées $s_i(t)$ tandis que la valeur de la matrice cumulée H(J) = $Q^{(J-1)}$ ...$Q^{(2)}Q^{(1)}$ transite sur le fil du haut 7, et que la sortie de chaque cellule $Q^{(j)}$ apparaît en 8. A la première cellule est appliquée en 9 la matrice unité.

A l'aide des informations provenant du fil du haut 7 et du fil du bas 6 (cf. figure 3), on effectue d'abord dans la cellule $Q^{(J)}$ la mise à jour des 4 cumulants $G_{qqq}$, $G_{qqr}$, $G_{qrr}$, et $G_{rrr}$ par la formule :

$$G_{ijk} = \sum_{u,v,w=1}^{3} H_{iu} H_{jv}{}^* H_{kw} g_{uvw}$$

Une fois cette mise à jour terminée (ce sera rapide car beaucoup des $H_{jv}$ sont nuls ou égaux à 1), la cellule évaluera deux nombres, c et s, définis par :

4

$$c = \frac{1}{\sqrt{1+|\theta|^2}} \quad et \quad s = \frac{\theta}{\sqrt{1+|\theta|^2}}$$

avec $\theta = |\theta| \exp[jarg\{\theta\}]$
après avoir calculé $\theta$ de la manière décrite ci-dessous :

Si $|G_{qqr}+G^*_{qrr}|>|G_{qqr}-G^*_{qrr}|$, calculer $\rho = [G_{qqq}-G_{qrr}-G^*_{rrr}+G^*_{qqr}]/$

$(G_{qqr}+G^*_{qrr})$,

Si $|G_{qqr}+G^*_{qrr}|<|G_{qqr}-G^*_{qrr}|$, calculer $\rho = [G_{qqq}-G_{qrr}+G^*_{rrr}-G^*_{qqr}]/$

$(G_{qqr}-G^*_{qrr})$,

Puis calculer

$$|\theta| = (-1)^k \frac{|\rho|}{2} + \sqrt{\frac{\rho\rho^*}{4}+1},$$

$arg\{\theta\} = arg\{\rho\} + k\,\pi$. (k valant indifféremment o ou 1).

La cellule X fait le produit de la matrice décrite par les données venant du bas en 8 par la matrice pxp venant de gauche (cf. figure 4). Deux nombres, c et s, arrivent du bas sur l'entrée inférieure de la cellule, ainsi que deux indices, q et r. La matrice délivrée en sortie (à droite de la cellule) est définie par $H_{sortie}$ = $Q^{(J)}H_{entrée}$, où la matrice $Q^{(J)}$ diffère de la matrice unité seulement en quatre coordonnées :

$Q^{(J)}(q,q) = c, Q^{(J)}(q,r) = s, Q^{(J)}(r,q) = -s^*$, et $Q^{(J)}(r,r) = c$, avec $1 \leq q \leq r \leq p$.

Cette cellule fait assez peu de travail car la plupart des lignes de $Q_{entrée}$ sont inchangées dans le calcul $H_{sortie} = Q^{(J)}H_{entrée}$ (seules deux d'entre elles doivent être calculées).
La dernière cellule X fournit la matrice Q qui correspond à

$$H_{(m+1)} = \prod_{z=1}^{m} Q(z)$$

- Algorithme II :

La cellule C calcule les quantités :

$M_{hijk}:= a^2.s_h(t).s_i(t)^*.s_j(t).s_k(t)^* + b^2.M_{hijk}$, avec $1 \leq h \leq i \leq j \leq k \leq p$,
$M_{jk}: = a^2.s_j(t).s_k(t)^* + b^2.M_{jk}$, avec $1 \leq j \leq k \leq p$.

Puis on calcule les cumulants :

$g_{hijk}: = M_{hijk} - M_{hi}M_{jk} - M_{hj}M_{ik} - M_{hk}M_{ij}$.

Notons que si les observations sont complexes et ont été obtenues après transformée de FOURIER de signaux réels, elles vérifient la propriété dite de "circularité" qui entraîne que $M_{hj} = 0$ et $M_{ik} = 0$. On peut donc se passer du calcul de ces termes. Par ailleurs, si le décorrélateur fonctionne correctement, il doit imposer en régime permanent $M_{jk} = 0$ si $j \neq k$ et $M_{jj} = 1$ si $j = k$. Si les moyens de calcul sont réduits, ces termes aussi pourront aussi être remplacés par leur valeur idéale, au prix d'une légère diminution de la

5

vitesse de convergence.

A l'aide des informations provenant du fil du haut et du fil du bas, on effectue d'abord dans la cellule $Q^{(J)}$ la mise à jour des 3 cumulants $G_{qqqr}$ , $G_{qqrr}$ , et $G_{qqqr}$ par la formule :

$$G_{ijkl} = \sum_{s,u,v,w=1}^{4} H_{is} H_{ju} * H_{kv} H_{lw} * g_{suvw}$$

Comme précédemment, on évalue ensuite les deux nombres c et s après avoir calculé $\theta$ de la manière décrite ci-dessous :

Si $|G_{qqrr}|>20.a^2 . M_{qq}.M_{rr}$,calculer $\rho = [G_{qqqr}-G_{qrrr}]/G_{qqrr}$ sinon $\rho = 0$

Puis

$$|\theta| = (-1)^k \frac{|\rho|}{2}+\sqrt{\frac{\rho\rho^{*}}{4}+1},$$

arg $\{\theta\} = $ arg$\{\rho\}+$k $\pi$.

De $\theta$ on déduit c et s par :

$$c \frac{1}{\sqrt{1+|\theta|^2}} \text{et } s = \frac{\theta}{\sqrt{1+|\theta|^2}}$$

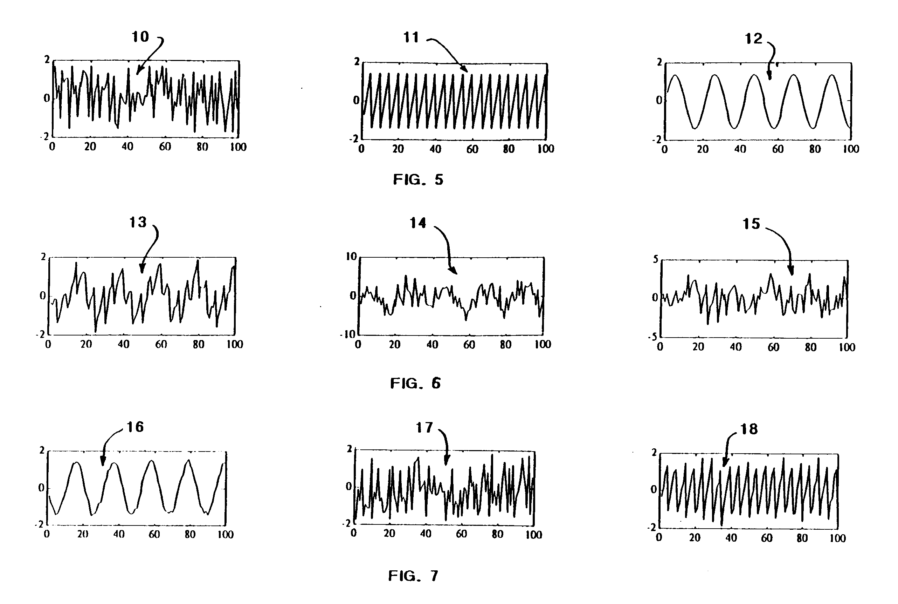

En se reportant maintenant aux diagrammes de résultats obtenus (figures 5 à 7), les nombres d'échantillons sont portés en abscisses sur ces diagrammes, et les amplitudes de signaux en ordonnées.

Les trois signaux-sources (figure 5) sont, dans cette simulation composés d'un bruit 10, d'un signal en dents de scie 11, et d'une sinusoïde 12.

Les trois signaux 13, 14, 15 réellement observés sont représentés en figure 6 : ils n'ont aucune ressemblance avec les signaux-sources de la figure 5.

Après traitement par le séparateur qui vient d'être décrit, ce séparateur utilisant l'algorithme II dans cet exemple, on obtient les trois signaux 16, 17, 18 représentés à la figure 7. Ces trois signaux sont obtenus pour $1/a^2 = 100$.

A noter que ces signaux sont obtenus sur des voies non correspondantes, et au signe près, ce qui n'est pas un très gros inconvénient. La sinusoïde 12 est obtenue en 16, sur la première voie au lieu de la troisième, et avec un signe opposé. Le bruit 10 est obtenu en 17, sur la deuxième voie au lieu de la première, et avec un signe opposé, et la dent de scie 11 est obtenue en 18, sur la troisième voie au lieu de la première et sans inversion de signe.

Les signaux qui correspondent à la sinusoïde et au bruit sont obtenus avec un changement de signe.

Parmi les avantages de l'invention par rapport à l'autre antérieur on peur citer :
- le fonctionnement aussi bien sur signaux réels que sur signaux complexes,
- la possibilité de fonctionnement lorsque le nombre de sources est inférieur ou égal à p,
- la possibilité d'utiliser 2 algorithmes, l'un à l'ordre 3, l'autre à l'ordre 4 ; seul l'algorithme II fonctionne pour des signaux à bande étroite),
- le fonctionnement en temps réel rendu possible grâce à un seul calcul de $G_{ijk}$ ou $G_{ijkl}$, même lorsque p>2,
- l'utilisation d'un test de conditionnement (algorithme I) ou d'un seuil de rentabilité (algorithme II) dans chacun des rotateurs élémentaires : voir les conditions sur G pour le calcul de $\rho$.

Parmi les nouvelles applications rendues possibles grâce à ce procédé, il convient de noter :
- la réduction de bruit aveugle :
  . solution effectuant une analyse en composantes indépendantes ;
  . traitement très performant si le bruit est Gaussien et le signal non-Gaussien ;
  . le traitement fonctionne sur tous signaux réels dont les statistiques sont inconnues ;

. pas de recours à des références de bruit seul ou de signal seul ;
- la localisation en sonar ou radar :
  . sur antennes perturbées ou décalibrées ;
  . élimination de brouilleurs forts très similaires au signal utile, voire de statistiques exactement identiques (le séparateur est capable se séparer des processus de mêmes statistiques) ; identification d'une "cocktail-party" ;
  . séparation de trajets multiples peu corrélés ;
  . localisation de p sources avec p capteurs ;
- l'estimation d'un signal inconnu reçu sur une antenne inconnue ;
- l'égalisation aveugle (application aux télécommunications en particulier).

**Revendications**

1. Procédé de séparation en temps réel de signaux e(t) reçus par un nombre p de capteurs prédéterminé, p étant un entier naturel supérieur ou égal à 2, ces signaux provenant d'un mélange linéaire, mais de fonction de transfert inconnue, d'un nombre entier naturel n inférieur ou égal à p de signaux-sources x-(t) qui sont également inconnus et qui proviennent de sources indépendantes et, sauf à la rigueur pour une d'entre elles, non Gaussiennes, dans lequel on traite ces signaux reçus e(t), captés et échantillonnés, dans une première étape (1) consistant à obtenir, de manière connue en soi, p signaux décorrélés s(t) à partir des signaux reçus e(t), la décorrélation n'étant pas réalisée à tous les ordres, caractérisé en ce qu'on traite ces signaux s(t) dans une deuxième étape (2) consistant à calculer une matrice orthogonale Q telle que x(t) = Q.s(t), x(t) étant les signaux-sources recherchés, cette matrice orthogonale Q, qui réalise une transformation linéaire, étant obtenue à partir de transformations polynomiales des données à l'aide de polynômes de degré 3 ou 4, et étant déterminée, à l'aide d'un algorithme stochastique qui mémorise des statistiques moyennes appelées moments et cumulants, et qui utilise alors ces moments et cumulants estimés pour réaliser la détermination en temps réel de la matrice Q.

2. procédé de séparation selon la revendication 1, caractérisé en ce qu'il consiste en outre à introduire dans le calcul des facteurs d'oubli (a, b) ajustables pour permettre au séparateur de faire face à des phénomènes non-stationnaires sur un grand intervalle de temps.

3. Dispositif pour la mise en oeuvre du procédé selon la revendication 1 ou la revendication 2, caractérisé en ce qu'il comporte :
   . un "décorrélateur-conditionneur" (1), connu en soi et apte à fournir, sur p sorties (2), p signaux décorrélés [s(t)] à partir des p signaux reçus [e(t)] qui lui sont appliqués sur ses p entrées (3) ; et
   . un "rotateur" (4) qui reçoit les p sorties (2) de signaux [s(t)] de ce décorrélateur-conditionneur (1), et qui est apte à effectuer le calcul de la matrice orthogonale Q, afin de fournir sur ses p sorties (5) les signaux-sources [x(t)] par application de la formule : x(t) = Q.s(t)

4. Dispositif selon la revendication 3, caractérisé en ce que le rotateur (4) comporte une cellule (C) de calcul des moments ou cumulants, cette cellule recevant les p signaux [s(t)] en provenance du décorrélateur-conditionneur (1), cette cellule sortant sur

$$m = \frac{p(p-1)}{2}$$

rotateurs élémentaires [$Q^{(1)}$, $Q^{(2)}$,...$Q^{(m)}$] associés en cascade à (m-1) cellules de multiplication (X), la sortie (Q) de la dernière cellule de multiplication étant appliquée à une cellule (F) effectuant le produit de cette sortie, qui représente la matrice orthogonale (Q) recherchée, par les p signaux décorrélés d'entrée [s(t)].

**Claims**

1. Method of real-time separation of signals e(t) received by a predetermined number p of sensors, p being a natural integer greater than or equal to 2, these signals coming from a linear mixture, but of unknown transfer function, of a natural integer number n less than or equal to p of source-signals x(t) which are also unknown and which come from independent and, except strictly for one of them, non-Gaussian sources, wherein these received, sensed and sampled signals e(t) are processed, in a first step (1) consisting in obtaining, in a manner known per se, p decorrelated signals s(t) from the received signals e(t), the decorrelation not being carried out to all orders, characterized in that these signals s(t) are processed in a second step (2) consisting in calculating an orthaganol matrix Q such that x(t) = Q.s(t), x(t) being the required source-signals, this orthogonal matrix Q, which effects a linear transformation, being obtained from polynomial transformations of the data with the aid of polynomials of degree 3 or 4, and being determined, with the aid of a stochastic algorithm which stores average statistics called moments and cumulants, and which then uses these estimated moments and cumulants to effect the real-time determination of the matrix Q.

2. Method of separation according to Claim 1, characterized in that it further consists in introducing into the calculation, adjustable omission factors (a, b) to enable the separator to deal with non-stationary phenomena over a large time interval.

3. Device for implementing the method according to Claim 1 or Claim 2, characterized in that it comprises:
   - a "decorrelator-conditioner" (1), known per se and able to provide, on p outputs (2), p decorrelated signals [s(t)] from the p received signals [e(t)] which are applied to it on its p inputs (3); and
   - a "rotator" (4) which receives the p outputs (2) of signals [s(t)] from this decorrelator-conditioner (1), and which is able to perform the calculation of the orthogonal matrix Q, so as to provide, on its p outputs (5), the source-signals [x(t)] by application of the formula:x(t) = Q.s(t).

4. Device according to Claim 3, characterized in that the rotator (4) comprises a cell (C) for calculating moments or cumulants, this cell receiving the p signals [s(t)] coming from the decorrelator-conditioner (1), this cell leaving on

$$m = \frac{p(p-1)}{2}$$

elementary rotators [$Q^{(1)}$, $Q^{(2)}$,...$Q^{(m)}$] associated in cascade with (m-1) multiplication cells (X), the output (Q) from the last multiplication cell being applied to a cell (F) performing the product of this output, which represents the required orthogonal matrix (Q), times the p decorrelated input signals [s(t)].

**Patentansprüche**

1. Verfahren zum Isolieren von Signalen e(t) in Echtzeit, welche von einer vorgegebenen Anzahl p von Meßwertaufnehmern empfangen werden, wobei p eine natürliche Zahl größer oder gleich 2 ist, wobei diese Signale aus einem linearen Gemisch, jedoch mit unbekannter Übertragungsfunktion, einer Anzahl von Quellensignalen x(t), die gleich einer natürlichen Zahl n kleiner oder gleich p ist, hervorgehen, wobei die Quellensignale eberfalls unbekannt sind und aus Quellen hervorgehen, die unabhängig voneinander und höchstens bis auf eine von ihnen nicht gaußsch sind, wobei in dem Verfahren diese empfangenen Signale e(t), die aufgenommen und abgetastet werden, in einer ersten Stufe (1) verarbeitet werden, die darin besteht, auf an sich bekannte Weise anhand der empfangenen Signale e(t) p dekorrelierte Signale s(t) zu erhalten, wobei die Dekorrelation nicht für alle Ordnungen ausgeführt wird, dadurch gekennzeichnet, daß diese Signale s(t) in einer zweiten Stufe (2) verarbeitet werden, die darin besteht, eine orthogonale Matrix Q zu berechnen, derart, daß x(t) = Q . s(t), wobei x(t) die gesuchten Quellensignale sind, wobei diese orthogonale Matrix Q, die eine lineare Transformation bewirkt, aus Polynomtransformationen von Daten mit Hilfe von Polynomen des Grades 3 oder 4 erhalten und mit Hilfe eines stochastischen Algorithmus bestimmt wird, der Mittelwert-Statistiken speichert, die Momente und Kumulanten genannt werden, und der dann diese geschätzten Momente und Kumulanten verwendet, um die Bestimmung der Matrix Q in Echtzeit auszuführen.

2. Isolationsverfahren gemäß Anspruch 1, dadurch gekennzeichnet, daß es außerdem darin besteht, in die Rechnung einstellbare Auslaßfaktoren (a, b) einzuführen, um der Isolationsvorrichtung zu ermöglichen, mit nichtstationären Phänomenen in einem großen Zeitintervall umzugehen.

3. Einrichtung für die Ausführung des Verfahrens gemäß Anspruch 1 oder Anspruch 2, dadurch gekennzeichnet, daß sie umfaßt:

.  einen "Dekorrelator-Konditionierer" (1), der an sich bekannt ist und dazu geeignet ist, an p Ausgängen (2) p dekorrelierte Signale [s(t)] aus p empfangenen Signalen [e(t)] zu liefern, die ihm an seinen p Eingängen (3) zugeführt werden; und

.  einen "Rotierer" (4), der die Signale [s(t)] der p Ausgänge (2) dieses Dekorrelators-Konditionierers (1) empfängt und dazu geeignet ist, die Berechnung der orthogonalen Matrix Q auszuführen, um an seinen p Ausgängen (5) durch Anwendung der Formel: $x(t) = Q \cdot s(t)$ die Quellensignale [x(t)] zu liefern.

4. Einrichtung gemäß Anspruch 3, dadurch gekennzeichnet, daß der Rotierer (4) eine Zelle (C) für die Berechnung der Momente oder Kumulanten enthält, wobei diese Zelle die p Signale [s(t)], die vom Dekorrelator-Konditionierer (1) kommen, empfängt, wobei diese Zelle Ausgänge zu $m = p(p-1)/2$ elementaren Rotierern [ $Q^{(1)}$, $Q^{(2)}$, ..., $Q^{(m)}$] besitzt, die mit $(m-1)$ Multiplikationszellen (X) in Kaskade geschaltet sind, wobei das Ausgangssignal (Q) der letzten Multiplikationszelle in eine Zelle (F) eingegeben wird, die das Produkt dieses die gesuchte orthogonale Matrix (Q) repräsentierenden Ausgangssignals mit den p dekorrelierten Eingangssignalen [s(t)] bildet.

**FIG. 1**

**FIG. 2**

$$H(J) = \prod_{z=1}^{J-1} Q^{(z)}$$

**FIG. 3**

**FIG. 4**

FIG. 5

FIG. 6

FIG. 7